Europäisches Patentamt

**European Patent Office**

**Office européen des brevets**

(11) Publication number: **0 020 853**
A2

# (12) EUROPEAN PATENT APPLICATION

(21) Application number: **80101022.4**

(22) Date of filing: **29.02.80**

(51) Int. Cl.³: **B 29 F 3/00**

(30) Priority: **21.06.79 IT 2376279**

(43) Date of publication of application: **07.01.81**
**Bulletin 81/1**

(84) Designated Contracting States: **AT BE CH DE FR GB LU NL SE**

(71) Applicant: **Montedison S.p.A., 31, Foro Buonaparte, Milan (IT)**

(72) Inventor: **Barosso, Emilio, 63, Via G.Amendola, S.M.Maddalena (Rovigo) (IT)**

(74) Representative: **Schmied-Kowarzik, Volker, Dr. Patentanwälte Dr. V. Schmied-Kowarzik et al, Dipl.-Ing. G. Dannenberg Dr. P. Weinhold, Dr. D. Gudel Dipl.-Ing. S. Schubert Siegfriedstrasse 8, D-8000 München (DE)**

(54) **Process for extruding and cross-linking polymers.**

(57) Cross-linked articles of thermoplastic polymers are economically prepared by extruding vertically a mixture of polymer and cross-linking agent at a temperature lower than that at which cross-linking of the polymer occurs and by then carrying out the cross-linking of the extruded product in a separate step by introducing it vertically in a heated bath of an inert liquid having a specify gravity, at the cross-linking temperature, ranging from −10% to +20% of the specific gravity of the extruded product at that temperature.

This invention relates to a process for preparing manu
factured articles by extrusion of thermoplastic polymers
and subsequent cross-linking of.same, using cross-linking
agents of the radical type.

As is known, saturated synthetic polymers can be cross-
-linked or cured by means of suitable agents.

These agents start reactions leading to the obtainment
of metastable free radicals on different molecular chains;
the successive reciprocal saturation creates a bond of che
mical nature between each chain and the other.

A cross-linked product is so obtained, the physical-me
chanical;properties of which are remarkably superior to tho
se of the starting polymer.

As is known, the extrusion of a polymer already cross-
-linked or at an advanced cross-linking stage requires,
due to the very high viscosity of the molten mass, rather
expensive processes in order to overcome the resistance
of the material being extruded.

On the other hand, if the cross-linking of the polymer
is made to occur after the extrusion, it is necessary that
the cross-linking temperature be at least equal to the
melting temperature. In fact, should it be lower, a non-mol
ten polymer had to be extruded, what, would require a complicated technology.

Finally, if cross-linking is effected on a polymer already extruded at a temperature higher than, or at the
most equal to the melting temperature, generally such polymer will not retain the shape previously imparted to it,
thus becoming unutilizable.

. . .

- 3 -

Such a process, used at present for vulcanizing rubbers, is possible only because the rubber retains a considerable viscous-elastic consistence even at temperatures exceeding the extrusion temperature.

The Applicant has now found a process which permits to economically prepare extruded and cross-linked articles from thermoplastic polymers, by causing the extrusion of the mixture of polymer and cross-linking agent to occur substantially in the absence of polymer cross-linking, and then by carrying out separately the cross-linking of the extruded product, under conditions which allow the product to retain its shape, even at higher temperatures than the softening or melting temperatures of the polymer.

The process according to the present invention comprises, in succession, the following steps :

a) vertically extruding a mixture containing at least a thermoplastic polymer and a cross-linking agent, at a temperature below the one at which the cross-linking of the thermoplastic polymer, or of the polymer having the lowest cross-linking temperature among the present polymers, occurs;

b) vertically introducing the extruded product into a bath consisting of an inert liquid having a specific gravity, at the cross-linking temperature, ranging from -10% to +20% of the specific gravity value of the extruded product at that temperature;

c) vertically cross-linking in such bath the extruded product, by heating the liquid forming the bath.

...

0020853

- 4 -

This process can be applicated to all the extrudable thermoplastic polymers, which can be cross-linked at a temperature at least equal to the one permitting the extrusion thereof. As an example we cite the polyethylene at a density of from 0.9 to 0.97 g/cc, the ethylene-propylene copolymers and the copolymers of ethylene with other alpha--olefins in general, the unsaturated polymers, etc.

As cross-linking agents it is possible to use all the compounds capable of cross-linking the polymer by their decomposition, through mechanisms suited to form free radicals, such as, for example, the compounds of the peroxide type, or the curing systems based on sulphur and derivatives thereof, provided such compounds become active at a temperature higher than or at least equal to the extrusion temperature of the polymer or of the polymeric composition.

The mixture of polymer and cross-linking agent, which is to be extruded, is prepared according to usual techniques, by employing the cross-linking agent in the quantities generally utilized for cross-linking the polymers according to conventional methods.

Fillers, pigments and the additives generally used in this kind of operations may be present too in the mixtures to be extruded according to the method of this invention.

The mixture must be extruded in such conditions, as to prevent as much as possible the cross-linking of the polymer or of the polymers therein contained, to such extent as to maintain the mass in such fluidity conditions as are sufficient for extruding it without excessive difficulties.

...

The product leaving the extruder can be then introduced as such, or after cooling, into the bath where its cross-lin king will occur.

The liquid forming the bath must be inert towards the polymer or the polymers contained in the extruded article, in the sense that it must not modify their physical or che mical aspect (for example by dissolution or swelling), what would impair the mechanical properties and the shape of the product. Anyway it is allowed to use a liquid (or a mixture of liquids, or in any case of substances which are in the liquid state at the cross-linking temperature) capable also of interreacting with the cross-linking agent or with the polymer/cross-linking agent system, for example by accelerating or slowing up the cross-linking reaction, or of exerting other positive actions on the system.

The substance or the mixture of substances forming the liquid bath has a boiling temperature preferably higher than the temperature at which cross-linking is made to occur. Pre ferred liquids are those having a boiling temperature higher by at least 30°C than the one at which the cross-link ing is carried out.

Furthermore such liquid must exhibit, at least in the cross-linking conditions, a viscosity lower than that of the polymer, or of the total composition constituting the extruded product when entering the bath.

Of course, the type of liquid to be used as bath will chiefly depend on the polymer or on the mixture of polymers forming the extruded product. In the case of polyethylene

...

- 6 -

it is possible to use, for example, oils of the silicone and paraffin type, proper molten salts, glycols and polygly cols.

When the extruded product enters the bath, the latter may have already the temperature at which the cross-linking is made to occur, in which case steps (b) and (c) take pla ce almost simultaneously, or it may have a lower temperatu re, in which case it will be brought to the cross-linking temperature in the successive step (c). Such temperature must be at least sufficient to promote the cross-linking action of the cross-linking agent.

The process of the present invention is suitable for the production, by extrusion and successive cross-linking, of bodies of different shapes. It is particularly advanta geous when applicated to the manufacture of tubular arti cles.

In this case it is advisable that the liquid of the cross -linking bath may be always at the same level inside and outside the tube, so as to exert a uniform hydrostatic pres sure along the perimeter of the manufactured article, the intensity of which can be adjusted by the operator by dif ferently raising the liquid column.

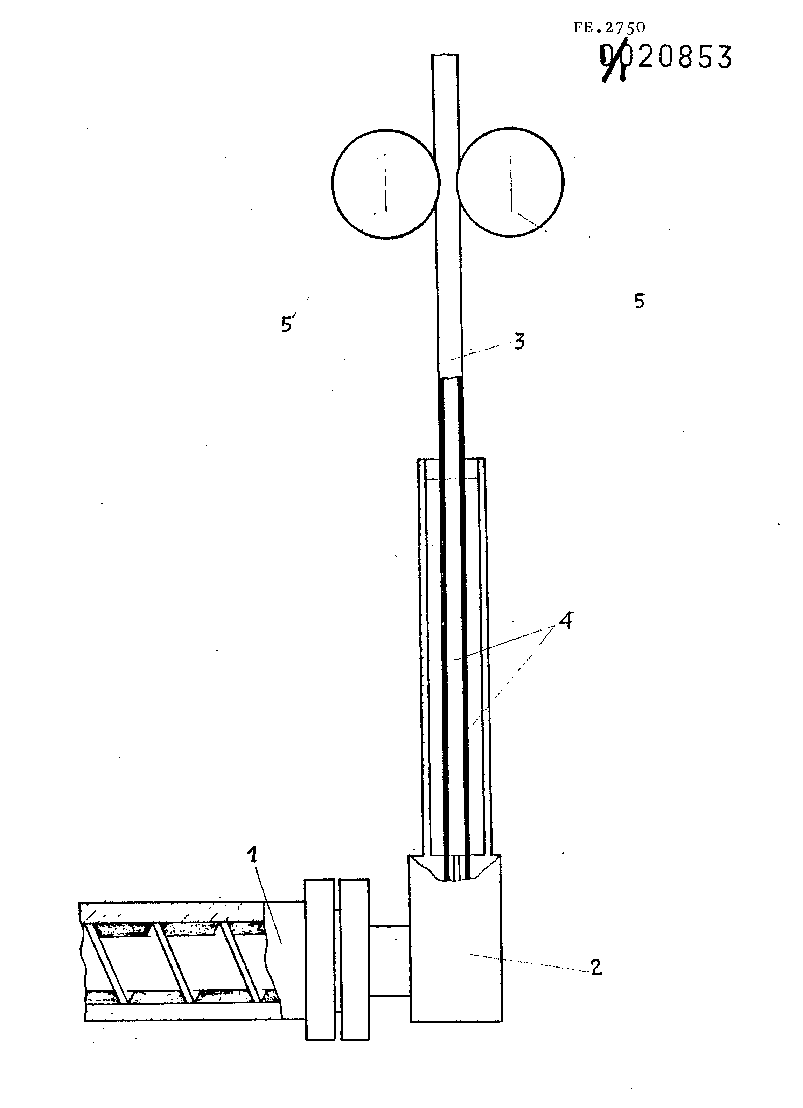

The figure shows a device for practising the process of the invention, illustrating the operative steps of the pre paration of a tubular article.

. In such figure one can notice screw extruder (1) for the extrusion of the mixture of polymer and cross-linking agent, head (2) for the vertical tubular extrusion, liquid

...

bath (4) in which the cross-linking occurs, extruded tube (3), and device (5) for vertically towing said tube.

The following example is given to illustrate the present invention, without being however a limitation thereof.

EXAMPLE

A homogeneous mixture of polyethylene of the low density type (d = 0.92) containing about 2.4% of t.butyl-hydroperoxide, was extruded through a vertical extruder equipped with a head for tubular extrusion, at a temperature of 125 °C. The tube so extruded was immediately conveyed, vertically, into a silicone oil bath maintained at a temperature of 160 °C, (an having at that temperature a specific gravity of 0.848 g/cc) where it remained for total 100 seconds.

The specific gravity of the extruded tube at 160 °C was about 0.8 g/cc.

At the conclusion of such period the tube was drawn out. It exhibited a perfectly circular section having an outside diameter of 18 mm, an inside diameter of 17 mm, and a cross-linking degree of 83% (determined by extraction of the soluble polymeric fraction by means of xylene at 135 °C).

...

WHAT WE CLAIM IS:

1) A process for preparing extruded and cross-linked arti cles from synthetic polymers, comprising, in succession, the following steps:

    a) vertically extruding a mixture of at least a ther moplastic polymer with a cross-linking agent, at a lower temperature than the cross-linking temperature of the polymer, or of the polymer having, among the present polymers, the lowest cross-linking temperature;

    b) vertically introducing the extruded product into a bath consisting of an inert liquid having, at the cross-linking temperature, a specific gravity of from -10% to +20% of the specific gravity value of the extruded product at that temperature;

    c) vertically cross-linking, in such bath, the extruded product, by heating the liquid forming the bath.

2) A process according to claim 1, in which the extruded product has a tubular shape.

3) A process according to claim 2, in which the liquid forming the bath is present, at the same level, inside and outside the extruded tube.

4) A process according to claim 1, in which the liquid forming the bath has a boiling temperature higher by at least 30 °C than the temperature at which cross-

...

- 2 -

0020853

-linking is caused to occur.

5) A process according to claim 1, in which the cross-
-linking agent is a compound of the peroxide type.

5′

5

3

4

1

2